Europäisches Patentamt

European Patent Office

Office européen des brevets

(11) Publication number: **0 139 246**
**A2**

# (12) EUROPEAN PATENT APPLICATION

(21) Application number: **84111443.2**

(22) Date of filing: **26.09.84**

(51) Int. Cl.⁴: **F 16 K 5/06**

(30) Priority: **29.09.83 JP 151753/83**

(43) Date of publication of application:
**02.05.85 Bulletin 85/18**

(84) Designated Contracting States:
**AT BE CH DE FR GB IT LI NL SE**

(71) Applicant: **Fujikin International, Inc.**
**3-4, 2-chome Itachibori**
**Nishi-ku Osaka(JP)**

(72) Inventor: **Ogawa, Hiroshi**
**9-11, 3-chome, Takanodai**
**Suita-shi(JP)**

(72) Inventor: **Mese, Hisayoshi**
**2-5-813, 3-chome, Taishibashi Asahi-ku**
**Osaka(JP)**

(74) Representative: **Paul, Dieter-Alfred, Dipl.-Ing.**
**Erftstrasse 82**
**D-4040 Neuss 1(DE)**

(54) **Ball valve.**

(57) A ball valve includes a valve casing (1) which comprises a valve body (7) having an internally threaded socket (9), and a pipe connecting bushing (11, 21) having an externally threaded portion (10) screwed into the socket (9). The outer peripheral surface (12) of the forward end of the bushing has a smaller diameter than the externally threaded portion to provide a movable circular step (13, 22), while the valve body (7) is internally formed with a stationary circular step (14) opposed to, and spaced apart from, the movable step (13, 22). Provided between the circular steps (13, 22) and (14) is a sealing ring (17, 23), which is clamped by these steps when the bushing (11, 22) is screwed in.

./...

EP 0 139 246 A2

FIG. 1

1

BALL VALVE

The present invention relates to improvements in a ball valve.

A ball valve is known wherein the valve casing comprises a valve body provided with a socket, and a pipe connecting bushing. The socket is provided with an internally threaded portion and has an inside diameter permitting the passage of a valve ball therethrough, while the bushing has an externally threaded portion which is screwed in the socket. To join the bushing to the valve body fluid-tightly, an O-ring is conventionally interposed between a flange provided at the base end of the bushing and the valve body end face opposed thereto. However, use of the O-ring entails the drawback that leakage occurs unless the preload therefor is suitably provided or that compressive permanent strain occurs to similarly result in leakage if the valve is used in a high-temperature atmosphere.

The main object of the present invention is to provide a ball valve which is free of the above problem.

The present invention provides a ball valve wherein the valve casing comprises a valve body provided with a socket, and a pipe connecting bushing, the socket being provided with an internally threaded portion and having an inside diameter permitting passage of a ball therethrough, the bushing having an externally threaded portion and screwed in the socket. The bushing has at its forward end an outer peripheral surface having a smaller diameter than the externally threaded portion to provide a movable circular step. The valve body is internally formed with a stationary circular step opposed to and spaced apart from the movable circular step. An annular space is defined by both the circular steps, the bushing end outer peripheral surface and the valve body inner surface opposed thereto. The annular space has disposed therein a sealing ring which is so shaped in cross section as to almost completely fill up the space.

With the ball valve of the present invention, the sealing ring is clamped between the movable step and the stationary step when the bushing is screwed into the socket of the valve body. Since the sealing ring accommodated in the annular space is so shaped in cross section as to almost completely fill up the space, the reaction of the sealing ring resulting from the clamping pressure acts on both the

3

steps and also on the bushing end outer surface and the valve body inner surface opposed thereto, assuring fluid-tight connection between the valve body and the bushing.

Embodiments of the invention will be described below with reference to the accompanying drawings.

Fig. 1 is a view in vertical section showing a ball valve according to the invention;

Fig. 2 is an enlarged fragmentary view in section showing the ball valve of Fig. 1; and

Fig. 3 is a fragmentary sectional view corresponding to Fig. 2 and showing a modified ball valve according to the invention.

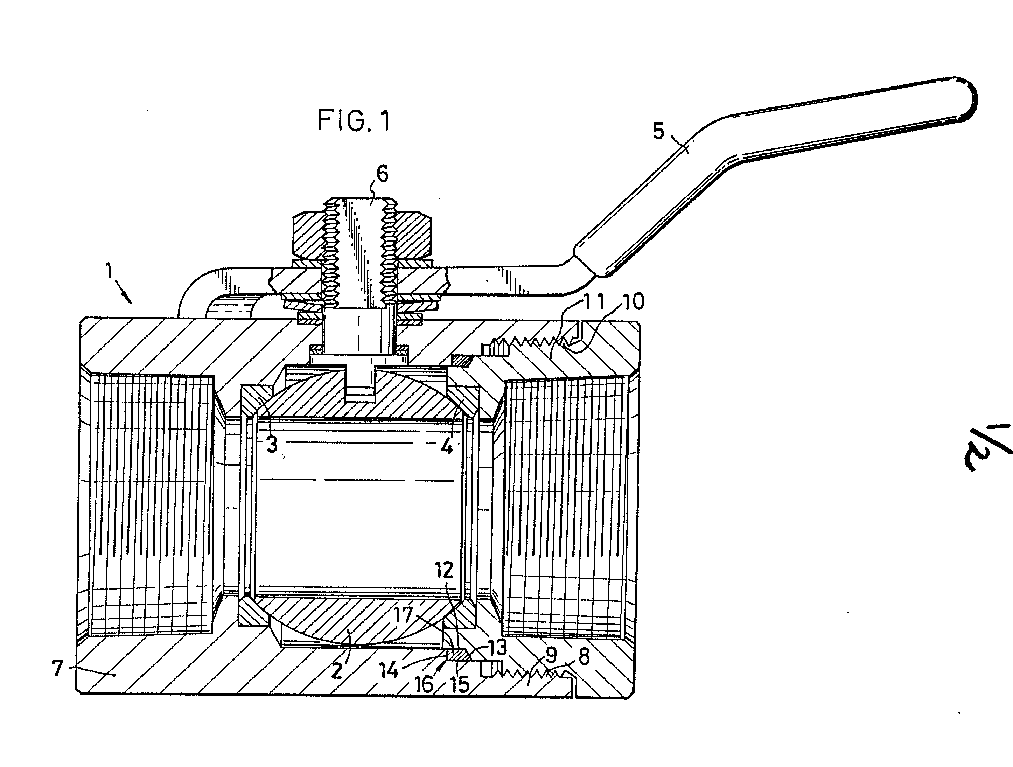

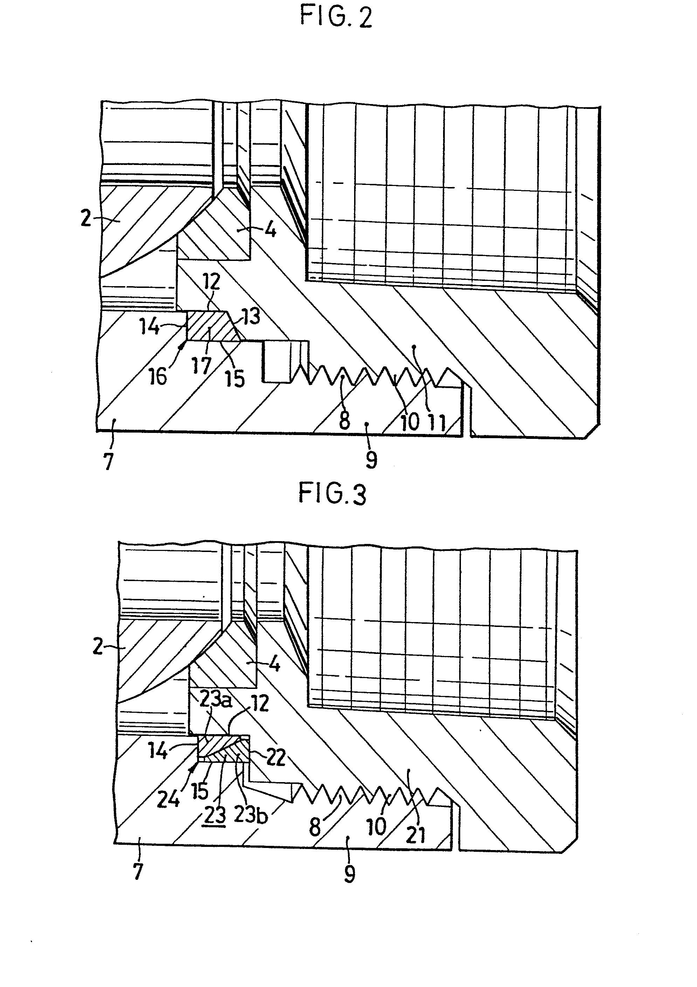

With reference to Figs. 1 and 2, a ball valve comprises a valve casing 1 having an opening at each end thereof, a ball 2 accommodated in the valve casing 1 centrally thereof, valve seats 3, 4 disposed on opposite sides of the ball 2, and a valve stem 6 having a handle 5. The valve casing 1 comprises a valve body 7 provided with a socket 9, and a pipe connecting bushing 11. The socket 9 is provided with an internally threaded portion 8 and has an inside diameter for permitting the passage of the ball 2. The bushing 11 has an externally threaded portion 10 screwed in the socket 9. The outer peripheral surface 12 of the forward end of the bushing 11 has a smaller diameter than the externally threaded portion 10 to provide a movable circular step 13. The valve body 7 is internally formed with a stationary circular step 14 opposed to, and spaced apart from, the movable circular step 13. An annular space 16 is defined by both the circular steps 13, 14, the bushing end outer peripheral surface 12 and the valve body inner surface 15 opposed to the surface 12. The annular space 16 has accommodated therein a sealing ring 17 of tetrafluoroethylene which is so shaped in cross section as to almost completely fill up the space 16. The outer peripheral surface 12 forms an obtuse angle with the movable circular step 13, while the valve body inner surface 15 makes a right angle with the stationary circular step 14. The sealing ring 17 is trapezoidal in cross section. The movable circular step 13 and the sealing ring 17 have tapered surfaces in contact with each other.

With the ball valve described, the sealing ring 17 is clamped between the movable step 13 and the stationary step 14 when the bushing 11 is screwed into the socket 9 of the valve body 7. At this time, the reaction of the sealing ring 17 resulting from the clamping pressure acts on both the steps 13, 14 and also on the bushing end outer surface 12 and the valve body inner surface 15 opposed to the surface 12. Moreover, the movable circular step 13 and the sealing ring 17 have the tapered surfaces where they are in contact with each other, consequently producing a wedging effect. These features combine to assure fluid-tight connection between the valve body 7 and the bushing 11.

Fig. 3 shows a modification of the essential part of the above ball valve. With the illustrated ball valve, the bushing end outer peripheral surface 12 and the movable circular step 22, as well as the valve body inner surface 15 and the stationary circular step 14, form a right angle. A sealing ring 23 comprises a pair of divided segments 23a, 23b which are wedge-shaped and which have slanting surfaces in contact with each other. The sealing ring 23, comprising the pair of segments 23a, 23b, almost completely fills up an annular space 24.

Also in the case of this ball valve, the sealing ring 23 is clamped between the movable step 22 and the stationary step 14 when a bushing 21 is screwed into the socket 9 of the valve body 7. The reaction of the sealing ring 23 resulting from the clamping pressure acts on the steps 22, 14 and also on the bushing end outer surface 12 and the valve body inner surface 15 opposed to the surface 12 as is the case with the embodiment shown in Figs. 1 and 2. However, because the sealing ring 23 is divided into the segments 23a, 23b which are wedge-shaped in cross section and are in contact with each other at the slanting surfaces, a greater wedging effect can be obtained than is available with the foregoing embodiment.

The material for forming the sealing ring is not limited to tetrafluoroethylene but can be other suitable synthetic resin. Also usable are rubbers, such as acrylonitrile-butadiene rubber, urethane rubber, silicone rubber and fluoroelastomer, and metals, such as copper, aluminum and nickel.

CLAIMS

1. A ball valve wherein the valve casing (1) comprises a valve body (7) provided with a socket (9), and a pipe connecting bushing (11, 21), the socket (9) being provided with an internally threaded portion (8) and having an inside diameter permitting passage of a ball (2) therethrough, the bushing (11, 21) having an externally threaded portion (10) and screwed in the socket (9), the ball valve being characterized in that the bushing (11, 21) has at its forward end an outer peripheral surface (12) having a smaller diameter than the externally threaded portion to provide a movable circular step (13, 22), the valve body (7) being internally formed with a stationary circular step (14) opposed to and spaced apart from the movable circular step (13, 22), an annular space (16, 24) bieng defined by both the circular steps (13,22) and (14), the bushing end outer peripheral surface (12) and the inner surface (15) of the valve body (7) opposed thereto, the annular space (16, 24) having disposed therein a sealing ring (17, 23) so shaped in cross section as to substantially completely fill up the space.

2. A ball valve as defined in claim 1 wherein the bushing end outer peripheral surface (12) forms an obtuse angle with the movable circular step (13), the valve body inner surface (15) forming a right angle with the stationary circular step (14), the sealing ring (17) being trapezoidal in cross section, the movable circular step (13) and the sealing ring (17) having tapered surfaces in contact with each other.

3. A ball valve as defined in claim 1 wherein the bushing end outer peripheral surface (12) and the movable circular step (22), as well as the valve body inner surface (15) and the stationary circular step (14), form a right angle, and the sealing ring (23) comprises a pair of divided segments (23a), (23b) wedge-shaped in cross section and having slanting surfaces in contact with each other.

4. A ball valve as defined in any one of claims 1 to 3 wherein the sealing ring (17, 23) is made of a material selected from the group consisting of copper, aluminum and nickel.

5. A ball valve as defined in any one of claims 1 to 3 wherein the sealing ring (17, 23) is made of a material selected from the group consisting of synthetic resin and rubber.

6. A ball valve as defined in claim 5 wherein the synthetic resin is tetrafluoroethylene.

7. A ball valve as defined in claim 5 wherein the rubber is a material selected from the group consisting of acrylonitrile-butadiene rubber, urethane rubber, silicone rubber and fluoroelastomer.

FIG. 1

FIG. 2

FIG.3